# EUROPÄISCHE PATENTSCHRIFT

(11) **EP 2 249 313 B1**
(45) Veröffentlichungstag und Bekanntmachung des Hinweises auf die Patenterteilung: **23.11.2011**
(21) Anmeldenummer: 09450094.9
(22) Anmeldetag: 05.05.2009
(51) Int. Cl.: G07B 15/00, B60R 25/00

(54) **Verfahren zur nutzungsspezifischen Initialisierung von Fahrzeuggeräten**
Method for use-specific initialisation of vehicle devices
Procédé d'initialisation spécifique à l'utilisation d'appareils de véhicules

(43) Veröffentlichungstag der Anmeldung: 10.11.2010
(73) Patentinhaber: Kapsch TrafficCom AG, 1120 Wien (AT)
(72) Erfinder: Nagy, Oliver, 1190 Wien (AT)
(74) Vertreter: Weiser, Andreas

(56) Entgegenhaltungen:
- EP-A1- 1 870 302
- WO-A1-2006/050543

## Beschreibung

Die vorliegende Erfindung betrifft ein Verfahren zur nutzungsspezifischen Initialisierung von Fahrzeuggeräten eines Straßenmautsystems, welche über eine Funkschnittstelle mit einer Zentrale kommunizieren und eine Gerätekennung haben.

Fahrzeuggeräte dieser Art, sog. "onboard units" bzw. OBUs, werden üblicherweise ohne Zuordnung zu einem spezifischen Benutzer oder Einsatzgebiet hergestellt und erst bei der Ausgabe mit den spezifischen Daten initialisiert und an den Benutzer übergeben ("Personalisierung"). Die Initialisierung erfolgt dabei direkt in der Ausgabe- bzw. Verkaufsstelle der OBU, am sog. "Point-of-Sales" (POS) mittels spezieller Lese- und Schreibgeräte über eine Kurzreichweitenfunkschnittstelle (dedicated short range communication, DSRC).

Dies hat den Nachteil, daß die Initialisierung einer OBU an die Orte der Verkaufsstellen gebunden ist, was das Initialisieren von in Neufahrzeugen fest verbauten, z.B. in ein Autoradio integrierten OBUs wesentlich erschwert. Auch das Ändern der Initialisierung einer bereits ausgegebenen OBU erfordert jedesmal ein Zurückbringen in eine Verkaufsstelle. AUS der EP 1 870 302 A2 ist es bekannt, eine OBU-Personalisierungsdatei mit Fahrer- und/oder Fahrzeugdaten in einer Zentrale zum Herunterladen auf eine OBU bereitzustellen. Das Herunterladen der Personalisierungsdatei wird vom Benutzer an der OBU angefordert, u.zw. aufgrund einer Benutzeridentifikation. Eine Änderung des Fahrzeugs, für das eine OBU personalisiert werden soll, erfordert somit jedesmal eine Änderung bzw. neue Registrierung des Benutzers in der Zentrale.Dies steht kurzfristigen, vorübergehenden und/oder häufigen Änderungen der Initialisierung entgegen, wie sie z.B. für einen Fahrerwechsel bei Mietwagen, Wagenwechsel bei Zweitwagenbesitzern oder die Verwendung einer OBU für verschiedene Flottenfahrzeuge äußerst wünschenswert wäre.

Die Erfindung setzt sich zum Ziel, die Nachteile des Standes der Technik zu überwinden und ein Verfahren zur einfachen und raschen Erst- und Änderungs-Initialisierung einer OBU zu schaffen.

Dieses Ziel wird mit einem Verfahren der einleitend genannten Art erreicht, das sich auszeichnet durch die Schritte

Registrieren von Fahrerdaten unter einer Fahrerkennung und von Fahrzeugdaten unter einer Fahrzeugkennung in der Zentrale;
Zuordnen einer Nutzungskennung zu einer Fahrerkennung und einer Fahrzeugkennung in der Zentrale;
Eingeben der Nutzungskennung in ein Fahrzeuggerät;
Senden der Nutzungskennung und der Gerätekennung vom Fahrzeuggerät über die Funkschnittstelle an die Zentrale;
Ermitteln der Fahrerdaten und Fahrzeugdaten für jene Fahrerkennung und Fahrzeugkennung, welchen die empfangene Nutzungskennung zugeordnet ist, in der Zentrale;
Rücksenden der ermittelten Fahrerdaten und Fahrzeugdaten von der Zentrale über die Funkschnittstelle an das durch die empfangene Gerätekennung angegebene Fahrzeuggerät; und
Initialisieren des Fahrzeuggeräts mit den empfangenen Fahrerdaten und Fahrzeugdaten.

Die Erfindung ermöglicht erstmals eine rasche und einfache Initialisierung einer OBU während des Betriebs eines Fahrzeugs, gleichsam "on the trip". Damit ist z.B. eine Personalisierung fabriksneuer Fahrzeuge mit vormontierten OBUs möglich, oder eine jederzeitige rasche Änderung einzelner Initialisierungsdaten, wie des Fahrzeugs, für das die OBU gerade verwendet wird, des Fahrers, welcher das Fahrzeug gerade betreibt, des Abrechnungskontos, wenn es sich z.B. um eine "post-pay"-OBU handelt, des für die OBU zuständigen Mautbetreibers, usw. Die Erfindung beruht insbesondere auf der Verwendung eigener nutzungsspezifischer Kennungen, die eine Kennung für den Benutzer bzw. Fahrer mit einer Kennung für das Benutzungsobjekt bzw. Fahrzeug kombinieren.

Die Nutzungskennung kann vom Benutzer selbst oder von der Zentrale vergeben und an den Benutzer ausgegeben werden. In beiden Fällen kann die Nutzungskennung sowohl frei gewählt sein als auch auf der Fahrerkennung und/oder der Fahrzeugkennung basieren; im einfachsten Fall könnte sie z.B. gleich der Fahrerkennung oder Fahrzeugkennung sein. Bevorzugt handelt es sich bei der Nutzungskennung aber um eine die Fahrerkennung und die Fahrzeugkennung kombinierende Kennung, welche somit die spezifische Nutzung einer OBU hinsichtlich eines bestimmten Fahrers und eines bestimmten Fahrzeugs kennzeichnet.

Letzteres eröffnet die Möglichkeit, daß das Eingeben der Nutzungskennung in das Fahrzeuggerät durch Anschließen einer ersten Speicherkarte mit der Fahrerkennung und einer zweiten Speicherkarte mit der Fahrzeugkennung an das Fahrzeuggerät erfolgt, wozu der Benutzer z.B. einen elektronischen Führerschein-Speicherchip und einen elektronischen Zulassungsscheinoder auch Fahrzeugschlüssel-Speicherchip verwenden könnte.

Alternativ kann das Eingeben der Nutzungskennung in das Fahrzeuggerät durch Anschließen zumindest einer einzigen Speicherkarte mit der darauf gespeicherten Nutzungskennung erfolgen, sodaß der Benutzer z.B. nur einen einzigen Chip benötigt.

Grundsätzlich ist es aber auch möglich, daß das Eingeben einfach vom Benutzer über eine Eingabeeinrichtung des Fahrzeuggeräts vorgenommen wird, z.B. über eine Tastatur.

In allen diesen Fällen ist es auch besonders günstig, wenn die Eingabeeinrichtung oder Speicherkarte(n) drahtlos an das Fahrzeuggerät angeschlossen wird, bevorzugt über eine Infrarot-, Bluetooth- oder RFID-Schnittstelle. So kann der Benutzer dazu beispielsweise die Tastatur eines drahtlos mit der OBU kommunizierenden Autoradios verwenden oder seine Speicherkarten in Form drahtloser Transponderchips oder Fernsteuerungen mit sich führen.

Eine weitere bevorzugte Ausführungsform der Erfindung zeichnet sich dadurch aus, daß das Eingeben in einem manipulationsgeschützten Speicher des Fahrzeuggeräts protokolliert wird, wodurch jederzeit Kontrollen der in die OBU eingegebenen Daten vorgenommen und diese beispielsweise auch mit den aktuellen Initialisierungsdaten der OBU verglichen werden können.

Die für das Senden und Rücksenden der Daten zwischen OBU und Zentrale verwendete Funkschnittstelle ist bevorzugt ein Mobilfunknetz, was vollständige Ortsungebundenheit bei der Initialisierung ermöglicht. Diese Ausführungsform des Verfahrens eignet sich insbesondere für OBUs eines GNSS-Mautsystems (global navigation satellite system - toll charging), welche ihre Positionsmeldung über ein Mobilfunknetz an die Zentrale abesetzen.

Alternativ erfolgt das genannte Senden und Rücksenden bevorzugt über ein an die Zentrale angeschlossenes Netz verteilter DSRC-Funkbaken. Diese Verfahrensvariante eignet sich besonders für DSRC-Mautsysteme mit bestehender straßenseitiger Infrastruktur und ermöglicht eine Initialisierung herkömmlicher DSRC-OBUs "on the trip".

Gemäß einer weiteren bevorzugten Ausführungsform der Erfindung wird vorgesehen, daß beim Rücksenden der Fahrerdaten und Fahrzeugdaten von der Zentrale an das Fahrzeuggerät auch nochmals die zugehörige Nutzungskennung rückgesendet, im Fahrzeuggerät gespeichert und dort mit der eingegebenen Nutzungskennung verglichen wird. Dadurch können allfällige Manipulationen an der OBU noch besser erkannt werden.

Bevorzugt können der Nutzungskennung auch noch weitere Kennungen, besonders bevorzugt eine Mautbetreiberkennung, zugeordnet und von der Zentrale an das Fahrzeuggerät rückgesendet werden. Die Nutzungskennung identifiziert damit nicht nur einen bestimmten Fahrer und ein bestimmtes Fahrzeug, sondern z.B. auch einen bestimmten Mautbetreiber, ein bestimmtes Abrechnungskonto usw.

Das Registrieren der Fahrer- und Fahrzeugdaten in der Zentrale kann entweder über ein Point-of-Sales-Terminal der Zentrale z.B. durch entsprechendes Personal vorgenommen werden, oder auch vom Benutzer selbst über ein Webinterface der Zentrale.

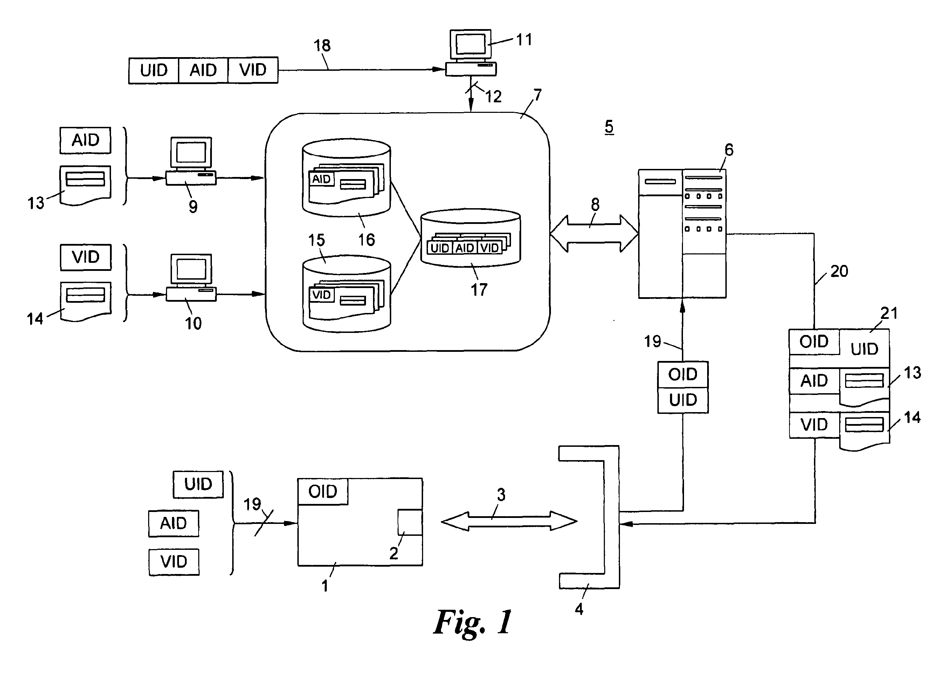

Die Erfindung wird nachstehend anhand eines in den beigeschlossenen Zeichnungen dargestellten Ausführungsbeispieles näher erläutert. Die einzige Fig. 1 der Zeichnung zeigt das Verfahren der Erfindung anhand des Signalflusses zwischen den verschiedenen Komponenten eines blockschaltbildlich dargestellten Straßenmautsystems.

Fig. 1 zeigt ein DSRC-Straßenmautsystem mit einer Vielzahl von Fahrzeuggeräten bzw. OBUs 1 (nur eine stellvertretend gezeigt), die mit einem Kurzreichweiten- bzw. DSRC-Transponder 2 ausgestattet sind, um über eine Funkschnittstelle 3 mit straβenseitig verteilten DSRC-Funkbaken 4 zu kommunizieren. Die Fahrzeuggeräte 1 sind jeweils mit einer eindeutigen Fahrzeuggeräte-Kennung OID versehen.

Die Funkbaken 4 stehen mit einer Zentrale 5 in Verbindung, die sich aus einem Server 6 und einem Datencenter 7 zusammensetzt. Server 6 und Datencenter 7 können auch geographisch verteilt sein und über eine Schnittstelle 8, z.B. das Internet, miteinander kommunizieren. In das Datencenter 7 können Daten über Point-of-Sales-Terminals 9, 10, ein Internet-Terminal 11, und/oder ein Webinterface 12 eingegeben werden.

Ziel des nachfolgend beschriebenen Verfahrens ist es, eine in ihrem Auslieferzustand "unbeschriebene" OBU 1 mit nutzungsspezifischen Daten zu initialisieren oder bei notwendigen Änderungen dieser Daten neu zu initialisieren, d.h. die Daten in die entsprechenden Register der OBU 1 einzuschreiben bzw. darin zu ändern. Die nutzungsspezifischen Daten umfassen insbesondere
- Fahrzeugdaten 14, welche das Fahrzeug kennzeichnen, in dem die OBU 1 zum Einsatz kommt, z.B. das amtliche Fahrzeugkennzeichen, die Fahrgestellnummer, der Name des Inhabers, die Fahrzeugtype, usw.; und
- Fahrerdaten 13, welche den aktuellen Fahrer des Fahrzeugs kennzeichnen, z.B. Name des Fahrers, Adresse, Abrechnungsdaten, Konto- oder Kreditkartennummern, usw.

Fahrerdaten 13 und Fahrzeugdaten 14 kennzeichnen gemeinsam eine spezifische Nutzung der OBU 1.

In einem ersten Schritt werden die Fahrerdaten 13 unter einer eindeutigen Fahrerkennung AID und die Fahrzeugdaten 14 unter einer eindeutigen Fahrzeugkennung VID im Datencenter 7 registriert, u.zw. durch Einspeisen über die POS-Terminals 9, 11 in eine Fahrerdatenbank 15 und eine Fahrzeugdatenbank 16 des Datencenters 7.

Die Fahrerkennung AID kann beispielsweise eine eindeutige Kundenkennung, Sozialversicherungsnummer, Ausweisnummer, Identifikationsnummer, Nummer eines Abrechnungskontos usw. des Fahrers sein. Demgemäß umfaßt der hier verwendete Begriff "Fahrerkennung" nicht nur unmittelbar auf die Personenidentität des Fahrers bezogene Kennungen wie seine Kundenkennung, Sozialversicherungsnummer, Ausweisnummer, Identifikationsnummer usw., sondern auch beliebige auf eine seiner Rollenidentitäten in einer bestimmten Anwendung bezogene Kennungen, wie eine oder mehrere Kennungen von ihm zugeordneten Abrechnungskonten, z.B. Autobahnmaut-Konten, Parkhaus-Abrechnungskonten, Zufahrtskontroll-Konten für reservierte Bereiche usw.

Die Fahrzeugkennung VID kann z.B. das amtliche Kennzeichen, die Fahrgestellnummer, ein Schlüsselcode, die Nummer eines elektronischen Zulassungsscheins usw. des Fahrzeugs sein.

Zur Registrierung der Fahrer- und Fahrzeugdaten 13, 14 in der Fahrer- und Fahrzeugdatenbank 15, 16 kann Bedienungspersonal an den POS-Terminals 9, 10 beispielsweise die Vorlage entsprechender amtlicher Ausweise verlangen. Die Registrierung braucht jedoch nur einmal zu erfolgen; anschließend sind die Fahrer- und Fahrzeugdaten 13, 14 in den Datenbanken 15, 16 des Datencenters 7 unter den Fahrer- und Fahrzeugkennungen AID, VID systemweit abrufbar.

Die Registrierung der Fahrer- und Fahrzeugdaten 13, 14 kann alternativ vom Benutzer selbst durchgeführt werden, beispielsweise über das Webinterface 12. Auch ist es nicht erforderlich, die Fahrerdaten 13 und Fahrzeugdaten 14 gleichzeitig in der Zentrale 5 zu registrieren, dies kann auch in zeitlichem Abstand erfolgen. Die Erfassung der Fahrzeugdaten 14 unter der Fahrzeugkennung VID kann z.B. auch im Zuge der Fahrzeugzulassung erfolgen.

Schließlich ist es auch möglich, daß die Fahrerdaten 13 und Fahrzeugdaten 14 auf entsprechenden Speicherkarten, z.B. SIM-Karten oder elektronischen Ausweisen, in maschinenlesbarer Form gespeichert vorliegen und über entsprechende Lesegeräte in die Zentrale 5 eingespeist werden.

In einem zweiten Schritt wird der Kombination aus einer bestimmten Fahrerkennung AID und einer bestimmten Fahrzeugkennung VID eine Benutzungskennung UID zugewiesen, d.h. die Fahrerkennung AID und Fahrzeugkennung VID werden über die Nutzungskennung UID miteinander verknüpft. Die Verknüpfung kann, falls gewünscht, in einer gesonderten Nutzungsdatenbank 17 des Datencenters 7 systemweit bereitgestellt werden.

Die Nutzungskennung UID kann beispielsweise von der Zentrale 7, z.B. dem Server 6, selbst berechnet oder zugewiesen und dann an den Benutzer über die Terminals 9 - 11 ausgegeben werden. Alternativ kann der Benutzer die Nutzungskennung UID selbst vorgeben, z.B. als selbstgewählter Code, und bei der Registrierung der Fahrer- und Fahrzeugdaten 13, 14 - oder auch später in einem gesonderten Schritt (Pfeil 18) - unter Bezugnahme auf die Fahrer- und Fahrzeugkennungen AID, VID in die Zentrale 5 einspeisen.

Die Nutzungskennung UID kann im einfachsten Fall direkt der Fahrerkennung AID oder der Fahrzeugkennung VID entsprechen. Bevorzugt ist sie ein neuer, diese Kennungen verknüpfender Code und kann entweder willkürlich gewählt oder aus der Fahrerkennung AID und der Fahrzeugkennung VID gebildet werden; im einfachsten Fall ergibt sich die Nutzungskennung UID z.B. als Kombination von AID und VID.

Nach Registrierung der Fahrer- und Fahrzeugdaten 13, 14 und Zuordnung der Kennungen AID, VID bzw. UID in den Datenbanken 15 - 17 stehen alle Daten für die nutzungsspezifische Initialisierung einer OBU 1 "on the trip" zur Verfügung.

Dazu gibt der Benutzer an einer OBU 1 über eine Schnittstelle 19 die Nutzungskennung UID - oder eine Kombination aus Fahrer- und Fahrzeugkennung AID, VID - in die OBU 1 ein. Dies kann manuell erfolgen, z.B. über eine Tastatur, oder mit Hilfe einer oder mehrerer Speicherkarte(n), welche über die Schnittstelle 19 an die OBU 1 angeschlossen werden. Wenn z.B. anstelle der Nutzungskennung UID die Fahrerkennung AID und Fahrzeugkennung VID gesondert eingegeben werden, können letztere auch auf gesonderten Speicherkarten vorliegen, u.zw. einer ersten Speicherkarte für die Fahrerkennung AID, z.B. einer maschinenlesbaren Kreditkarte oder einem maschinenlesbaren Führerschein, und einer zweiten Speicherkarte für die Fahrzeugkennung VID, z.B. einem maschinenlesbaren Zulassungsschein oder einem fahrzeugspezifischen Transponderchip, beispielsweise einem Transponder-Schlüssel.

Die Eingabetastatur oder die Speicherkarte(n) können auch drahtlos mit der OBU 1 kommunizieren, zu welchem Zweck die Schnittstelle 19 z.B. eine Infrarot-, Bluetooth- oder RFID-Schnittstelle ist. Auf diese Weise könnte beispielsweise ein mit einer Bluetooth-Schnittstelle ausgebildetes Autoradio oder Mobiltelefon zur Eingabe der Fahrerkennung AID und ein RFID-Transponder-Startschlüssel des Fahrzeugs zur Eingabe der Fahrzeugkennung VID dienen.

Nach Eingabe der Nutzungskennung UID oder gegebenenfalls der Fahrer- und Fahrzeugkennung AID, VID sendet die OBU 1 diese Kennung(en) zusammen mit ihrer eigenen Fahrzeuggerätekennung OID über die Funkschnittstelle 3 an den Server 6 der Zentrale 5 (Pfeil 19). Wenn die Nutzungskennung UID aus Fahrerkennung AID und Fahrzeugkennung VID gebildet wird und in die OBU 1 die Fahrerkennung und die Fahrzeugkennung AID, VID gesondert eingegeben werden, kann die OBU 1 z.B. auch selbst die Nutzungskennung UID aus der Kombination von AID und VID bilden und gemeinsam mit der Gerätekennung OID an die Zentrale 5 senden.

Falls gewünscht, kann die Registrierung, Zuordnung und Eingabe der genannten Kennungen UID, AID, VID mittels zusätzlicher eingabepflichtiger PIN-Codes abgesichert werden.

In der Zentrale 5 werden die unter der Fahrerkennung AID und Fahrzeugkennung VID registrierten Fahrer- und Fahrzeugdaten 13, 14 aus den Fahrer- und Fahrzeugdatenbanken 15, 16 herausgesucht, erforderlichenfalls unter Verwendung der Zuordnungsdatenbank 17, um aus einer empfangenen Nutzungskennung UID die zugeordneten Fahrer- und Fahrzeugkennungen AID, VID zu ermitteln. Anschließend werden die so ermittelten Fahrer- und Fahrzeugdaten 13, 14 von der Zentrale 5 an die durch die Gerätekennung OID identifizierte OBU 1 über die Funkschnittstelle 3 zurückgesandt, siehe Pfeil 20 und Datenpaket 21.

Das rückgesandte Datenpaket 21 kann optional nochmals die Nutzungskennung UID und/oder die Fahrer- und Fahrzeugkennungen AID, VID enthalten, um diese gegebenenfalls in der OBU 1 mit den dort eingegebenen Kennungen UID bzw. AID, VID gegenprüfen zu können. Wenn das Datenpaket 21 in der OBU 1 in einem manipulationsgeschützten Speicher gespeichert wird, können solche Validierungsprüfungen auch zu einem beliebigen späteren Zeitpunkt im laufenden Betrieb vorgenommen werden.

Darüber hinaus können alle Eingaben in die OBU 1, z.B. von Nutzungskennungen UID und/oder Fahrer- und Fahrzeugkennung AID, VID, in einem manipulationsgeschützten Speicher der OBU 1 protokolliert werden, um allfällige Manipulationen erkennen zu können.

Derartige Überprüfungen können in der OBU 1 auch periodisch wiederholt werden, um Unterschiede zwischen dem von der Zentrale 5 empfangenen Datenpaket 21 und den eingegebenen Daten UID, AID, VID festzustellen und gegebenenfalls einen Manipulationsalarm an die Zentrale 5 abzusetzen.

Neben den genannten Fahrer- und Fahrzeugkennungen AID, VID können einer Nutzungskennung UID auch noch weitere Kennungen im Datencenter 7, insbesondere in der Verknüpfungsdatenbank 17, zugeordnet und in dem Datenpaket 21 an die OBU 1 rückgesandt werden, beispielsweise eine Mautbetreiberkennung, eine Abrechnungskontokennung usw.

Die Funkschnittstelle 3 kann nicht nur von der hier vorgestellten Art eines DSRC-Funkbakennetzes sein, sondern beispielsweise auch die Funkschnittstelle eines herkömmlichen Mobilfunknetzes sein, über welches entsprechend ausgestattete OBUs 1 mit der Zentrale 5 kommunizieren, wie es z.B. bei einem GNSS-Mautsystem der Fall ist.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Verfahren zur nutzungsspezifischen Initialisierung von Fahrzeuggeräten (1) eines Straßenmautsystems, welche über eine Funkschnittstelle (3) mit einer Zentrale (5) kommunizieren und eine Gerätekennung (OID) haben, **gekennzeichnet durch** die Schritte:
Registrieren von Fahrerdaten (13) unter einer Fahrerkennung (AID) und von Fahrzeugdaten (14) unter einer Fahrzeugkennung (VID) in der Zentrale (5);
Zuordnen einer Nutzungskennung (UID) zu einer Fahrerkennung (AID) und einer Fahrzeugkennung (VID) in der Zentrale (5) ;
Eingeben der Nutzungskennung (UID) in ein Fahrzeuggerät (1) ;
Senden der Nutzungskennung (UID) und der Gerätekennung (OID) vom Fahrzeuggerät (1) über die Funkschnittstelle (3) an die Zentrale (5);
Ermitteln der Fahrerdaten (13) und Fahrzeugdaten (14) für jene Fahrerkennung (AID) und Fahrzeugkennung (VID), welchen die empfangene Nutzungskennung (UID) zugeordnet ist, in der Zentrale (5);
Rücksenden der ermittelten Fahrerdaten (13) und Fahrzeugdaten (14) von der Zentrale (5) über die Funkschnittstelle (3) an das **durch** die empfangene Gerätekennung (OID) angegebene Fahrzeuggerät (1); und
Initialisieren des Fahrzeuggeräts (1) mit den empfangenen Fahrerdaten (13) und Fahrzeugdaten (14).

2. Verfahren nach Anspruch 1, **dadurch gekennzeichnet, daß** das Zuordnen durch Eingeben der Nutzungskennung (UID) durch den Benutzer erfolgt.

3. Verfahren nach Anspruch 1, **dadurch gekennzeichnet, daß** das Zuordnen durch Vergeben der Nutzungskennung (UID) durch die Zentrale (5) und Ausgeben der Nutzungskennung (UID) an den Benutzer erfolgt.

4. Verfahren nach einem der Ansprüche 1 bis 3, **dadurch gekennzeichnet, daß** die Nutzungskennung (UID) aus der Fahrerkennung (AID) und der Fahrzeugkennung (VID) gebildet wird.

5. Verfahren nach Anspruch 4, **dadurch gekennzeichnet, daß** das Eingeben durch Anschließen einer ersten Speicherkarte mit der Fahrerkennung (AID) und einer zweiten Speicherkarte mit der Fahrzeugkennung (VID) an das Fahrzeuggerät (1) erfolgt.

6. Verfahren nach einem der Ansprüche 1 bis 3, **dadurch gekennzeichnet, daß** das Eingeben durch Anschließen zumindest einer Speicherkarte mit darauf gespeicherter Nutzungskennung (UID) an das Fahrzeuggerät (1) erfolgt.

7. Verfahren nach einem der Ansprüche 1 bis 3, **dadurch gekennzeichnet, daß** das Eingeben vom Benutzer über eine Eingabeeinrichtung des Fahrzeuggeräts (1) erfolgt.

8. Verfahren nach einem der Ansprüche 5 bis 7, **dadurch gekennzeichnet, daß** die Eingabeeinrichtung oder Speicherkarte(n) drahtlos an das Fahrzeuggerät (1) angeschlossen werden, bevorzugt über eine Infrarot-, Bluetooth- oder RFID-Schnittstelle (19).

9. Verfahren nach einem der Ansprüche 1 bis 8, **dadurch gekennzeichnet, daß** das Eingeben in einem manipulationsgeschützten Speicher des Fahrzeuggeräts (1) protokolliert wird.

10. Verfahren nach einem der Ansprüche 1 bis 9, **dadurch gekennzeichnet, daß** das Senden und Rücksenden über ein Mobilfunknetz (3) erfolgt.

11. Verfahren nach einem der Ansprüche 1 bis 9, **dadurch gekennzeichnet, daß** das Senden und Rücksenden über ein an die Zentrale (5) angeschlossenes Netz verteilter DSRC-Funkbaken (4) erfolgt.

12. Verfahren nach einem der Ansprüche 1 bis 11, **dadurch gekennzeichnet, daß** beim Rücksenden der Fahrerdaten (13) und Fahrzeugdaten (14) auch die zugehörige Nutzungskennung (UID) rückgesendet, im Fahrzeuggerät (1) gespeichert und dort mit der eingegebenen Nutzungskennung (UID) verglichen wird.

13. Verfahren nach einem der Ansprüche 1 bis 12, **dadurch gekennzeichnet, daß** der Nutzungskennung (UID) weitere Kennungen, bevorzugt eine Mautbetreiberkennung, zugeordnet und von der Zentrale (5) an das Fahrzeuggerät (1) rückgesendet werden.

14. Verfahren nach einem der Ansprüche 1 bis 13, **dadurch gekennzeichnet, daß** das Registrieren über ein Point-of-Sales-Terminal (9, 10) der Zentrale (5) erfolgt.

15. Verfahren nach einem der Ansprüche 1 bis 13, **dadurch gekennzeichnet, daß** das Registrieren über ein Webinterface (12) der Zentrale (5) erfolgt.

## Claims

1. Method for use-specific initialization of onboard units (1) of a road toll system, which communicate with a central system (5) via a radio interface (3) and include a unit identifier (OID), **characterised by** the steps of:
registering driver data (13) under a driver identifier (AID) and vehicle data (14) under a vehicle identifier (VID) in the central system (5);
allocating a use identifier (UID) to a driver identifier (AID) and to a vehicle identifier (VID) in the central system (5) ;
inputting the use identifier (UID) to an onboard unit (1);
transmitting the use identifier (UID) and the unit identifier (OID) from the onboard unit (1) to the central system (5) via the radio interface (3);
determining the driver data (13) and vehicle data (14) for that driver identifier (AID) and vehicle identifier (VID) to which the received use identifier (UID) is allocated in the central system (5);
transmitting back the determined driver data (13) and vehicle data (14) from the central system (5) to the onboard unit (1) specified by the received unit identifier (OID) via the radio interface (3); and
initializing the onboard unit (1) with the received driver data (13) and vehicle data (14).

2. Method according to claim 1, **characterised in that** the allocating is performed through the inputting of the use identifier (UID) by the user.

3. Method according to claim 1, **characterised in that** the allocating is performed through the assignment of the use identifier (UID) by the central system (5) and the outputting of the use identifier (UID) to the user.

4. Method according to one of claims 1 to 3, **characterised in that** the use identifier (UID) is formed from the driver identifier (AID) and the vehicle identifier (VID).

5. Method according to claim 4, **characterised in that** the inputting takes place by connecting a first memory card with the driver identifier (AID) and a second memory card with the vehicle identifier (VID) to the onboard unit (1).

6. Method according to one of claims 1 to 3, **characterised in that** the inputting takes place by connecting at least one memory card with the use identifier (UID) stored on the card to the onboard unit (1).

7. Method according to one of claims 1 to 3, **characterised in that** the inputting is carried out by the user by means of an input device of the onboard unit (1).

8. Method according to one of claims 5 to 7, **characterised in that** the input device or the memory card(s) are connected wirelessly to the onboard unit (1), by means of an infrared, Bluetooth, or RFID interface (19).

9. Method according to one of claims 1 to 8, **characterised in that** the inputting is logged in a tamper-proof memory of the onboard unit (1).

10. Method according to one of claims 1 to 9, **characterised in that** the transmitting is performed via a mobile radio network (3).

11. Method according to one of claims 1 to 9, **characterised in that** the transmitting is performed via a network of DSRC radio beacons (4) connected to the central system (5).

12. Method according to one of claims 1 to 11, **characterised in that** in the transmitting back the driver data (13) and vehicle data (14), the associated use identifier (UID) is also transmitted back, stored in the onboard unit (1), and compared with the input use identifier (UID) there.

13. Method according to one of claims 1 to 12, **characterised in that** additional identifiers, preferably a toll operator identifier, are allocated to the use identifier (UID) and transmitted back from the central system (5) to the onboard unit (1).

14. Method according to one of claims 1 to 13, **characterised in that** the registering is performed by means of a point-of-sale terminal (9, 10) of the central system (5).

15. Method according to one of claims 1 to 13, **characterised in that** the registering is performed by means of a Web interface (12) of the central system (5).

## Revendications

1. Procédé d'initialisation spécifique à l'utilisation d'appareils de véhicules (1) d'un système de péage routier, qui communiquent par une interface radio (3) avec une centrale (5) et possèdent un identifiant d'appareil (OID), **caractérisé par** les étapes:
enregistrement des données du conducteur (13) sous un identifiant de conducteur (AID) et des données du véhicule (14) sous un identifiant de véhicule (VID) dans la centrale (5) ;
association d'un identifiant d'utilisation (UID) à un identifiant de conducteur (AID) et à un identifiant de véhicule (VID) dans la centrale (5) ;
saisie de l'identifiant d'utilisation (UID) dans un appareil de véhicule (1) ;
envoi de l'identifiant d'utilisation (UID) et de l'identifiant d'appareil (OID) par l'appareil de véhicule (1) via l'interface radio (3) à la centrale (5) ;
détermination des données du conducteur (13) et des données du véhicule (14) pour celui identifiant de conducteur (AID) et identifiant de véhicule (VID), auxquels est associé l'identifiant d'utilisation reçu (UID), dans la centrale (5) ;
renvoi des données du conducteur (13) et données du véhicule (14) déterminées par la centrale (5) via l'interface radio (3) à l'appareil de véhicule (1) indiqué par l'identifiant d'appareil reçu (OID) ; et
initialisation de l'appareil de véhicule (1) avec les données du conducteur (13) et
données du véhicule (14) reçues.

2. Procédé selon la revendication 1, **caractérisé en ce que** l'association est effectuée par l'utilisateur via la saisie de l'identifiant d'utilisation (UID).

3. Procédé selon la revendication 1, **caractérisé en ce que** l'association est effectuée par attribution de l'identifiant d'utilisation (UID) par la centrale (5) et remise de l'identifiant d'utilisation (UID) à l'utilisateur.

4. Procédé selon l'une quelconque des revendications 1 à 3, **caractérisé en ce que** l'identifiant d'utilisation (UID) est formé à partir de l'identifiant de conducteur (AID) et de l'identifiant de véhicule (VID).

5. Procédé selon la revendication 4, **caractérisé en ce que** la saisie est effectuée par raccordement d'une première carte mémoire avec l'identifiant du conducteur (AID) et d'une seconde carte mémoire avec l'identifiant du véhicule (VID) à l'appareil de véhicule (1).

6. Procédé selon l'une quelconque des revendications 1 à 3, **caractérisé en ce que** la saisie est effectuée par raccordement d'au moins une carte mémoire avec l'identifiant d'utilisation enregistré dessus (UID) à l'appareil du véhicule (1).

7. Procédé selon l'une quelconque des revendications 1 à 3, **caractérisé en ce que** la saisie est effectuée par l'utilisateur via un dispositif de saisie de l'appareil du véhicule (1).

8. Procédé selon l'une quelconque des revendications 5 à 7, **caractérisé en ce que** le dispositif de saisie ou la/les cartes mémoire sont raccordées sans fil à l'appareil de véhicule (1), de préférence par une interface infrarouge, bluetooth ou RFID.

9. Procédé selon l'une quelconque des revendications 1 à 8, **caractérisé en ce que** la saisie est consignée dans une mémoire protégée des manipulations de l'appareil de véhicule (1).

10. Procédé selon l'une quelconque des revendications 1 à 9, **caractérisé en ce que** l'envoi et le renvoi sont effectués par un réseau mobile (3).

11. Procédé selon l'une quelconque des revendications 1 à 9, **caractérisé en ce que** l'envoi et le renvoi sont effectués par un réseau raccordé à la centrale (5) de radiobalises DSRC (4) réparties.

12. Procédé selon l'une quelconque des revendications 1 à 11, **caractérisé en ce que** lors du renvoi des données du conducteur (13) et des données du véhicule (14), l'identifiant d'utilisation (UID) afférent est aussi renvoyé, enregistré dans l'appareil du véhicule (1) et y est comparé à l'identifiant d'utilisation (UID) saisi.

13. Procédé selon l'une quelconque des revendications 1 à 12, **caractérisé en ce que** d'autres identifiants, de préférence un identifiant d'exploitant de péage, sont associés à l'identifiant d'utilisation (UID) et sont renvoyés par la centrale (5) à l'appareil de véhicule (1).

14. Procédé selon l'une quelconque des revendications 1 à 13, **caractérisé en ce que** l'enregistrement est effectué par un terminal de point de vente (9, 10) de la centrale (5).

15. Procédé selon l'une quelconque des revendications 1 à 13, **caractérisé en ce que** l'enregistrement est effectué par une interface web (12) de la centrale (5).
